# EUROPEAN PATENT SPECIFICATION

(11) **EP 2 818 384 B1**
(45) Date of publication and mention of the grant of the patent: **20.07.2016**
(21) Application number: 14173516.7
(22) Date of filing: 23.06.2014
(51) Int. Cl.: B62D 1/19

(54) **Steering system attachment**
Befestigung eines Lenksystems
Fixation de système de direction

(30) Priority: 28.06.2013 JP 2013136931
(43) Date of publication of application: 31.12.2014
(73) Proprietor: JTEKT Corporation, Osaka-shi Osaka 542-8502 (JP)
(72) Inventor: Morita, Shigeru, Osaka-shi, Osaka 542-8502 (JP); Hasegawa, Isao, Osaka-shi, Osaka 542-8502 (JP); Nagahashi, Yutaka, Osaka-shi, Osaka 542-8502 (JP); Yokozeki, Tatsutomo, Osaka-shi, Osaka 542-8502 (JP)
(74) Representative: Winter, Brandl, Fürniss, Hübner, Röss, Kaiser, Polte - Partnerschaft mbB

(56) References cited:
- JP-A- 2012 171 585
- US-A- 3 747 427
- US-B1- 6 176 151

## Description

### BACKGROUND OF THE INVENTION

### 1. Field of the Invention

The invention relates to a steering system.

### 2. Description of the Related Art

In a conventional vehicle steering system, as described in Japanese Patent Application Publication No. 2012-171585 (JP 2012-171585 A), a steering column is fixed, at its rear portion in the vehicle-longitudinal direction, to an attachment stay disposed on a vehicle body side, by a pair of fixing plates of a fixing bracket. Each fixing plate has a cutout groove that opens at a rear portion of the fixing plate in the vehicle longitudinal direction. A capsule is coupled to each fixing plate. The capsule retains, from above and below, portions of the fixing plate, which are opposed to each other across the cutout groove in the vehicle-width direction (a peripheral edge portion of the fixing plate, which defines the cutout groove). At the time of a secondary collision, the fixing bracket is detached from the attachment stay and displaced toward the vehicle front side while the capsules are left at the attachment stay. Thus, an impact of the secondary collision is absorbed. This function is referred to as energy absorption (abbreviated to EA).

In JP 2012-171585 A, a portion of the capsule that retains the peripheral edge portion of the fixing plate, which defines the cutout groove, from above and below is a groove-like portion extending in the front-rear direction over the entire region of right and left side faces of the capsule. At the time of a secondary collision, the groove-like portions of the capsules keep retaining the peripheral edge portions around the cutout grooves until the fixing plates are completely detached from the capsules. Thus, until the fixing plates are completely detached from the capsules, twisting may occur between the fixing plates and the capsules. Note that "twisting" in this specification means the state where the bracket is tilted with respect to each capsule and thus the bracket gets stuck in the capsule or is not easily detached from the capsule. The detachment of the fixing bracket for absorbing an impact of the secondary collision may become unstable due to the occurrence of twisting.

A steering system having the features of the preamble of claim 1 is known from US 3 747 427 A.

### SUMMARY OF THE INVENTION

The invention is made in light of the above-described circumstances, and one object of the invention is to provide a steering system configured to prevent twisting between a bracket and a capsule when the bracket is detached from the capsule at the time of a secondary collision. The object is solved by a steering system having the features of claim 1. Advantageous further developments are set forth in the dependent claims.

A steering system according to an aspect of the invention includes:
a bracket that holds a steering shaft to which a steering member is connected, and that is movable toward a downstream side in a prescribed moving direction together with the steering member at the time of a secondary collision;
a plate member that is provided in the bracket to extend along the moving direction, and that has a cutout groove that is a recess opened toward an upstream side in the moving direction and formed in an upstream side end portion of the plate member in the moving direction, the cutout groove passing through the plate member in a thickness direction of the plate member; and
a capsule that is fitted in the cutout groove to position the bracket with respect to a vehicle body before the secondary collision, and that allows the bracket to move toward the downstream side in the moving direction by being removed toward the upstream side in the moving direction from the cutout groove at the time of the secondary collision, wherein
the capsule has
a first end portion that is located in an upstream side portion of the capsule in the moving direction, and that retains a peripheral edge portion of the plate member in the thickness direction, the peripheral edge portion defining the cutout groove,
a second end portion that is located in a downstream side portion of the capsule in the moving direction, and that retains the peripheral edge portion of the plate member in the thickness direction, the peripheral edge portion defining the cutout groove, and
a lateral end portion that is located between the first end portion and the second end portion in the capsule, and that faces the peripheral edge portion of the plate member without retaining the peripheral edge portion in the thickness direction.

According to the above aspect, the capsule is fitted in the cutout groove formed in the plate member of the bracket that moves toward the downstream side in the moving direction at the time of a secondary collision, and allows the bracket to move by being removed from the cutout groove at the time of the secondary collision. The capsule retains the plate member at the first end portion formed in the upstream side portion in the moving direction and the second end portion formed in the downstream side portion in the moving direction, but the lateral end portion located between the first end portion and the second end portion does not retain the peripheral edge portion around the cutout groove. Thus, the distance over which the bracket moves until the capsule is removed from the cutout groove is reduced.

If the bracket attempts to tilt with respect to the moving direction due to an impact of a secondary collision obliquely input into the steering member, twisting is about to occur between the plate member of the bracket and the capsule that retains the plate member. However, the distance over which the bracket moves until the capsule is removed from the cutout groove is reduced by forming the lateral end portion in the capsule, and thus the capsule is removed from the cutout groove without causing twisting. As described above, in the steering system, it is possible to prevent twisting between the plate member of the bracket and the capsule.

In the steering system according to the above aspect, the first end portion of the capsule may have:
an inner end portion that retains an inner peripheral edge portion of the peripheral edge portion of the plate member, the inner peripheral edge portion being located on the steering shaft side, the peripheral edge portion defining the cutout groove;
and an outer end portion that retains an outer peripheral edge portion of the peripheral edge portion of the plate member, the outer peripheral edge portion being located on an opposite side to the steering shaft with respect to the cutout groove. With this configuration, the first end portion retains the plate member at two spots on both sides, that is the inner end portion and the outer end portion, and thus, the capsule is able to stably support the bracket.

In the steering system with the above configuration, a size of a portion of the inner peripheral edge portion, the portion being retained by the inner end portion, and a size of a portion of the outer peripheral edge portion, the portion being retained by the outer end portion, may be unequal to each other. With this configuration, the size of the portion of the inner peripheral edge portion, which is retained by the inner end portion (referred to as "inner retained portion"), is unequal to the size of the portion of the outer peripheral edge portion, which is retained by the outer end portion (referred to as the "outer retained portion"). Note that, the inner side is the steering shaft side in the plate member, and the outer side is the opposite side in the plate member from the steering shaft. When the plate member is deflected due to an impact of a secondary collision, even if the degree of deflection of the plate member differs between the inner side and the outer side, the capsule is removed from the cutout groove without causing twisting with respect to the plate member if inner retained portion and the outer retained portion are different in size from each other depending on the difference in the degree of deflection between the inner side and the outer side.

In the steering system with the above configuration, the portion of the inner peripheral edge portion, the portion being retained by the inner end portion, may be smaller than the portion of the outer peripheral edge portion, the portion being retained by the outer end portion. Thus, even if the inner side is more greatly deflected than the outer side in the plate member due to an impact of a secondary collision, the capsule is removed from the cutout groove without causing twisting.

In the steering system according to the above aspect, the first end portion and the second end portion may each have an arc-shape or a polygonal shape as viewed from the thickness direction.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic side view schematically showing a steering system according to an embodiment of the invention;
FIG. 2 is a view of the steering system in FIG. 1, as viewed from a position below a vehicle body;
FIG. 3 is a perspective view of a capsule in the embodiment of the invention;
FIG. 4 is a perspective view of the capsule as viewed from a direction different from the direction from which the capsule is viewed in FIG. 3;
FIG. 5 is an enlarged view of main portions of the steering system in FIG. 2;
FIG. 6A is a sectional view of the capsule taken along the line VIa-VIa illustrated in FIG. 5;
FIG. 6B is a sectional view of the capsule taken along the line VIb-VIb illustrated in FIG. 5;
FIG. 6C is a sectional view of the capsule taken along the line VIc-VIc illustrated in FIG. 5; and
FIG. 7 is an enlarged view of main portions of a steering system according to another embodiment of the invention;

### DETAILED DESCRIPTION OF EMBODIMENTS

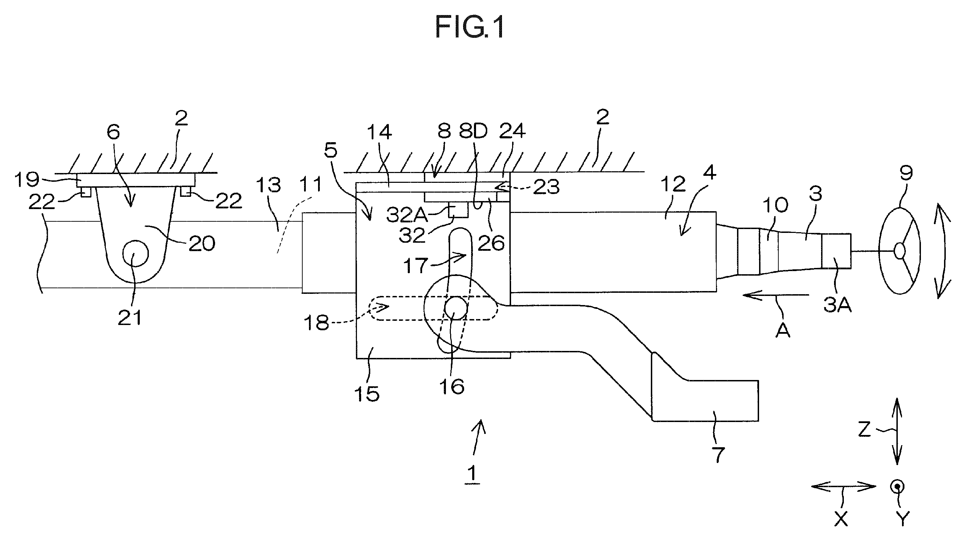

Hereinafter, embodiments of the invention will be described in detail with reference to the accompanying drawings. Note that "twisting" in this specification means the state where the bracket (each plate member) is tilted with respect to each capsule and thus the bracket (each plate member) gets stuck in the capsule or is not easily detached from the capsule. FIG. 1 is a schematic side view schematically illustrating a steering system 1 according to an embodiment of the invention. In FIG. 1, the left side of a sheet on which FIG. 1 is drawn corresponds to the front side of a vehicle body 2, the right side of the sheet corresponds to the rear side of the vehicle body 2, the upper side of the sheet corresponds to the upper side of the vehicle body 2, and the lower side of the sheet corresponds to the lower side of the vehicle body 2. As illustrated in FIG. 1, the steering system 1 includes, as main components, a steering shaft 3, a steering column 4, an upper bracket 5 (bracket), a lower bracket 6, and a lever 7. The steering system 1 is attached to the vehicle body 2 with the upper bracket 5 and the lower bracket 6. One end (rear end 3A) of the steering shaft 3 is connected to a steering member 9 such as a steering wheel. In the steering system 1, it is possible to make a telescopic adjustment (extension-contraction adjustment of the steering column 4) and a tilt adjustment (tilt adjustment of the steering column 4) by turning the lever 7 (details of these adjustments will be described later).

The steering shaft 3 has a generally cylindrical shape or a generally columnar shape as a whole. The steering shaft 3 includes an upper shaft 10 and a lower shaft 11 that are disposed coaxially. The upper shaft 10 is located closer to the steering member 9 (the rear side of the vehicle body) than the lower shaft 11 and is movable in the axial direction relative to the lower shaft 11. Hereinafter, the extending direction of the steering shaft 3 is defined as an axial direction X. The axial direction X coincides with the right-left direction in FIG. 1. Directions perpendicular to the axial direction X are defined as a right-left direction Y and an up-down direction Z. The right-left direction Y corresponds to a direction perpendicular to the sheet on which FIG. 1 is drawn and the up-down direction Z corresponds to an up-down direction in FIG. 1.

The steering column 4 has a generally cylindrical shape as a whole and accommodates the steering shaft 3. The steering column 4 includes an upper column 12 and a lower column 13 that are disposed coaxially. The upper column 12 is located closer to the steering member 9 (the rear side of the vehicle body) than the lower column 13 and is movable in the axial direction X relative to the lower column 13. The upper column 12 and the upper shaft 10 are connected to each other via, for example, a bearing (not illustrated), and the lower column 13 and the lower shaft 11 are connected to each other via, for example, a bearing (not illustrated). Thus, the upper column 12 and the upper shaft 10 are movable together with each other in the axial direction X relative to the lower column 13 and the lower shaft 11. Thus, the steering column 4 and the steering shaft 3 are extended and contracted together with each other.

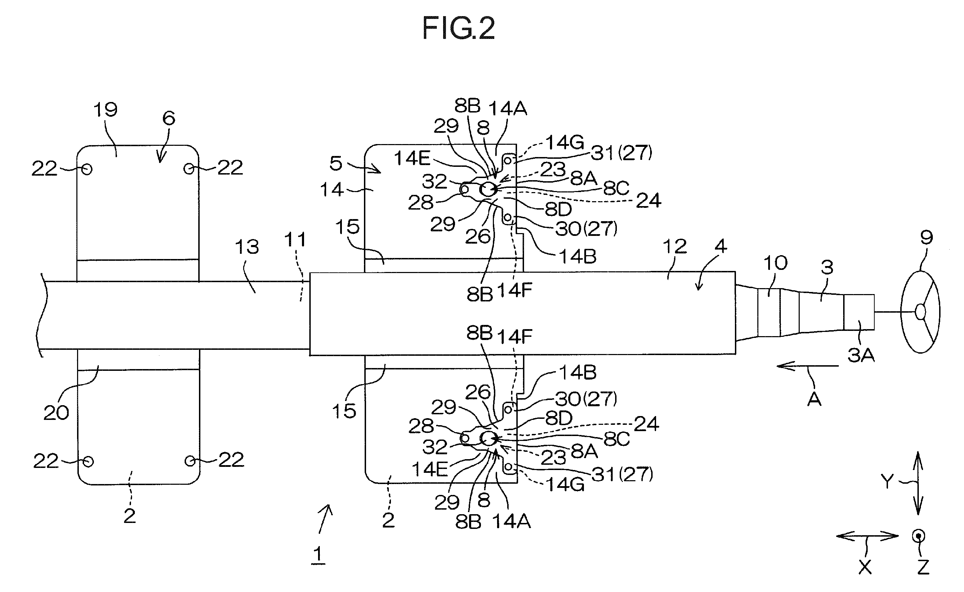

FIG. 2 is a view of the steering system 1 in FIG. 1, as viewed from a position below the vehicle body 2. The right-left direction of a sheet on which FIG. 2 is drawn coincides with the axial direction X in FIG. 1. The direction perpendicular to the sheet on which FIG. 2 is drawn coincides with the up-down direction Z in FIG. 1. The up-down direction of the sheet on which FIG. 2 is drawn coincides with the right-left direction Y in FIG. 1. Description will be made below with reference to FIG. 2 in addition to FIG. 1.

The upper bracket 5 holds the steering shaft 3 and the steering column 4 and couples the steering system 1 to the vehicle body 2. The upper bracket 5 includes, as main components, a plate member 14, a pair of side plates 15, and a rotary shaft 16 (see FIG. 1). The plate member 14 is provided in the upper bracket 5. The plate member 14 has a rectangular flat plate shape which is long in the right-left direction Y as viewed from the up-down direction Z and is symmetric about the steering shaft 3 (see FIG. 2). The thickness direction of the plate member 14 coincides with the up-down direction Z.

The side plates 15 extend downward from the plate member 14. The side plates 15 are arranged to face each other in the right-left direction Y and holds the steering shaft 3 from both sides in the right-left direction Y (see FIG. 2). The rotary shaft 16 extends in the right-left direction Y and passes through the side plates 15, at a position below the steering column 4. In FIG. 2, the rotary shaft 16 is not illustrated for the purpose of convenience of explanation.

For example, a tilt guide groove 17 extending in the up-down direction Z is formed in each of the side plates 15 (see FIG. 1). Telescopic guide grooves 18 extending in the axial direction X are formed in the upper column 12 (more specifically, a movable bracket (not illustrated) fixed to the upper column 12). The rotary shaft 16 is passed through both the tilt guide grooves 17 and the telescopic guide grooves 18. Thus, the upper column 12 (the steering column 4) is coupled to the vehicle body 2 via the rotary shaft 16 and the upper bracket 5. The rotary shaft 16 is movable within the tilt guide grooves 17 and the telescopic guide grooves 18 along the longitudinal directions thereof. By moving the rotary shaft 16 up and down in the tilt guide grooves 17 relative to the side plates 15, the tilt adjustment is made. By moving the rotary shaft 16 in the axial direction X in the telescopic guide grooves 18 relative to the side plates 15, the telescopic adjustment is made.

The lower bracket 6 supports the steering column 4 (specifically, the lower column 13) and couples the steering system 1 to the vehicle body 2. The lower bracket 6 includes a top plate 19, a pair of side plates 20, and a tilt center shaft 21 (not illustrated in FIG. 2). The top plate 19 has a rectangular flat plate shape which is long in the right-left direction Y as viewed from the up-down direction Z, and is symmetric about the steering shaft 3 (see FIG. 2). The top plate 19 is attached at four corners thereof to the vehicle body 2 with bolts 22.

The side plates 20 extend downward from the top plate 19. The side plates 20 are disposed to face each other in the right-left direction Y and hold the steering shaft 3 from both sides in the right-left direction Y (see FIG. 2). The tilt center shaft 21 extends in the right-left direction Y, passes through the side plates 20, and is coupled to the lower column 13. The lower bracket 6 supports the lower column 13 through the use of the tilt center shaft 21. Thus, the entirety of the steering column 4 including the lower column 13 is turned about the tilt center shaft 21. The tilt adjustment is performed through the turning of the steering column 4.

The lever 7 (not illustrated in FIG. 2 for the purpose of convenience of explanation) is a rod member disposed at one end of the rotary shaft 16 of the upper bracket 5. The lever 7 turns about the rotary shaft 16 together with the rotary shaft 16. Through the turning of the lever 7, the upper bracket 5 and the upper column 12 (more specifically, the movable bracket) come into press-contact with each other or are released from the press-contact. When the press-contact between the upper bracket 5 and the upper column 12 is cancelled, a driver is able to make the telescopic adjustment and the tilt adjustment of the steering system 1. When the lever 7 is turned in the opposite direction after the telescopic adjustment or the tilt adjustment is completed, the upper bracket 5 and the upper column 12 come into press-contact with each other and the posture of the steering system 1 is locked.

As illustrated in FIG. 2, a pair of capsules 8 (two capsules 8 in total) used to fix the upper bracket 5 to the vehicle body 2 is provided. The capsules 8 are disposed at rear end portions 14A (the right end portions in FIG. 2) of the plate members 14, at positions symmetric about the steering shaft 3. Each capsule 8 has a block shape as a whole and constitutes the steering system 1. The capsules 8 hold the entirety of the upper bracket 5 by retaining the plate members 14 from above and below.

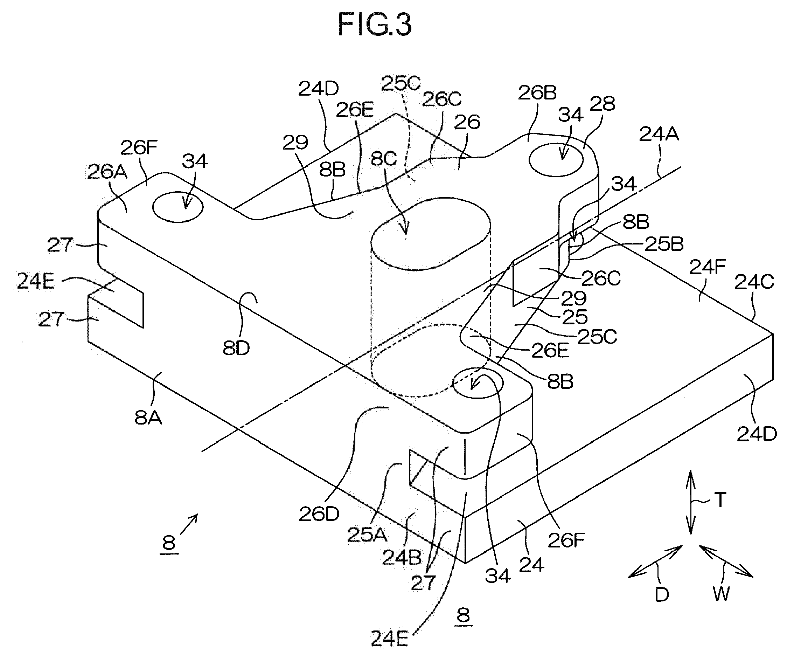

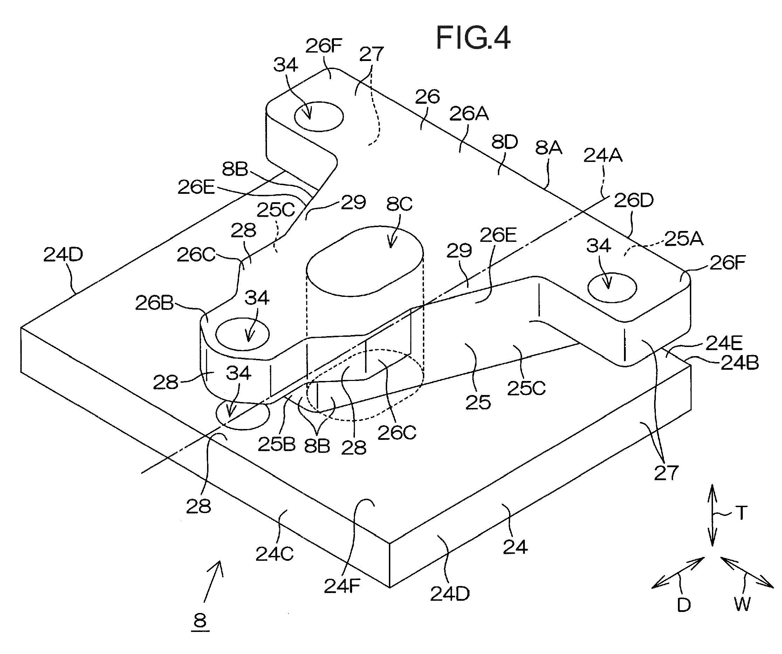

The shape of each capsule 8 will be described below. FIG. 3 is a perspective view of the capsule 8 according to the embodiment of the invention. FIG. 4 is a perspective view of the capsule 8 as viewed from a direction different from the direction from which the capsule 8 is viewed in FIG. 3. In FIG. 3, the up-down direction of the sheet on which FIG. 3 is drawn corresponds to a thickness direction T of the capsule 8. Directions perpendicular to the thickness direction T are defined as a width direction W and a depth direction D. The width direction W is a direction extending from the lower right side to the upper left side in FIG. 3, and the depth direction D is a direction extending from the lower left side to the upper right side in FIG. 3. FIG. 4 is a view illustrating the capsule 8 illustrated in FIG. 3 as viewed from the upper right side in the depth direction D.

Description will be made below with reference to FIG. 3 and FIG. 4 in addition to FIG. 1 and FIG. 2. As illustrated in FIG. 3, the capsule 8 is a single-piece member having a first retaining portion 24, an opposing portion 25, and a second retaining portion 26. The first retaining portion 24 and the second retaining portion 26 are portions that hold the plate member 14 by retaining the plate member 14 interposed therebetween. The first retaining portion 24, the opposing portion 25, and the second retaining portion 26 are arranged in the thickness direction T. The first retaining portion 24 is a plate having a generally square shape as viewed from the thickness direction T. A line extending in the depth direction D at the center in the width direction W of the first retaining portion 24 is defined as a reference line 24A.

The opposing portion 25 is a plate having a generally trapezoidal shape as viewed from the thickness direction T, and is narrowed in the width direction W, from the lower left side toward the upper right side in the depth direction D in FIG. 3. The opposing portion 25 located adjacent to the first retaining portion 24 in the thickness direction T and is formed integrally with the first retaining portion 24. The opposing portion 25 is narrower in the width direction W than the first retaining portion 24 on the lower leftmost side in the depth direction D. The opposing portion 25 is symmetric about the reference line 24A in the width direction W as viewed from the thickness direction T.

Out of end faces of the opposing portion 25 in the depth direction D, an end face 25A on the lower left side in FIG. 3 is flush with an end face 24B on the lower left side in FIG. 3 out of end faces of the first retaining portion 24 in the depth direction D. On the other hand, out of the end faces of the opposing portion 25 in the depth direction D, a distal end face 25B on the upper right side in FIG. 3 is located on the further lower left side (inner side of the first retaining portion 24) (i.e., is located closer to the end faces 25A, 24B) than an end face 24C on the upper right side in FIG. 3 out of the end faces of the first retaining portion 24 in the depth direction D. Lateral end faces 25C of the opposing portion 25 on both sides in the width direction W are located closer to the reference line 24A (on the inner side of the first retaining portion 24) than both end faces 24D of the first retaining portion 24 in the width direction W.

The second retaining portion 26 is a plate having a generally T-shape as viewed from the thickness direction T. Specifically, the second retaining portion 26 has a base end portion 26A extending in the width direction W, on the lower left side in the depth direction D in FIG. 3. The second retaining portion 26 gets narrow in the width direction W, from the base end portion 26A to a distal end portion 26B on the upper right side in the depth direction D in FIG. 3. The second retaining portion 26 has bulged portions 26C that bulge toward opposite sides in the width direction W and that are contiguous with the distal end portion 26B from the base end portion 26A side (see FIG. 3 and FIG. 4). The bulged portions 26C are connected to the distal end portion 26B.

The second retaining portion 26 is disposed on the opposite side of the opposing portion 25 from the first retaining portion 24, so that the opposing portion 25 is interposed between the second retaining portion 26 and the first retaining portion 24 in the thickness direction T. The second retaining portion 26 is formed integrally with the first retaining portion 24 and the opposing portion 25. The second retaining portion 26 is symmetric about the reference line 24A in the width direction W, as viewed from the thickness direction T. In the state illustrated in FIG. 3, an end face 26D of the second retaining portion 26 on the lower left side in the depth direction D is flush with the end face 24B of the first retaining portion 24. The base end portion 26A has a width equal to that of the first retaining portion 24 (more specifically, the distance between both end faces 24D) in the width direction W, and bulges outward in the width direction W from the lateral end faces 25C of the opposing portion 25, which are on the same sides as the corresponding base end portion 26A in the width direction W.

Further, as viewed from the thickness direction T, the distal end portion 26B reaches at a position corresponding to the end face 24C of the first retaining portion 24, and protrudes from the distal end face 25B of the opposing portion 25 toward the end face 24C (see FIG. 3 and FIG. 4). End faces (more specifically, end faces in regions between the base end portion 26A and the bulged portions 26C in the depth direction D) 26E of the second retaining portion 26 in the width direction W are flush with the lateral end faces 25C of the opposing portions 25 (which are on the same sides as the corresponding lateral end faces 25C in the width direction W). The bulged portions 26C slightly bulge outward in the width direction W from the lateral end faces 25C which are on the same sides as the corresponding lateral end faces 25C in the width direction W. In the outline of the second retaining portion 26 as viewed from the thickness direction T, all the corners are rounded instead of being angulated.

In this way, the second retaining portion 26 protrudes at the base end portion 26A and the bulged portions 26C from the opposing portion 25 on both sides in the width direction W. That is, the base end portion 26A and the bulged portions 26C are opposed to the first retaining portion 24 on both sides of the reference line 24A, with a clearance corresponding to the thickness of the opposing portion 25 left therebetween. The second retaining portion 26 protrudes at the distal end portion 26B from the opposing portion 25 in the depth direction D (see FIG. 4). That is, the distal end portion 26B is opposed to the first retaining portion 24 with a clearance corresponding to the thickness of the opposing portion 25 left therebetween.

Because the distal end portion 26B is connected to the bulged portions 26C, the second retaining portion 26 is opposed to the first retaining portion 24 at total of five spots in both lateral end portions 26F (two spots) of the base end portion 26A in the width direction W, the distal end portion 26B (one spot), and the bulged portions 26C (two spots) with a clearance corresponding to the thickness of the opposing portion 25 left between the first retaining portion 24 and the second retaining portion 26. On the other hand, the second retaining portion 26 is located, at the end faces 26E in the width direction W, at the same position as the opposing portion 25 (the second retaining portion 26 does not protrude from the opposing portion 25 in the width direction W), and is not opposed to the first retaining portion 24.

In the capsule 8 illustrated in FIG. 3, out of the end portions on the lower left side in the depth direction D, both end portions in the width direction W are defined as first end portions 27. Further, the end portions on the upper right side in the depth direction are defined as second end portions 28, and the end portions on both sides in the width direction W are defined as lateral end portions 29. The first end portions 27 include both lateral end portions 26F of the base end portion 26A in the width direction W and end portions 24E of the first retaining portion 24 on the lower left side. The second end portions 28 include the distal end portion 26B, the bulged portions 26C, and an end portion 24F of the first retaining portion 24 on the upper right side. The lateral end portions 29 include end portions (in the width direction W) of the second retaining portion 26 and the opposing portion 25, which are located between the base end portion 26A and the bulged portions 26C. That is, the lateral end portions 29 are located between the first end portions 27 and the second end portions 28. Between the first end portions 27 and the second end portions 28, the first retaining portion 24 and the second retaining portion 26 are not opposed to each other in the thickness direction T.

As viewed from the thickness direction T, the first end portions 27 have a generally rectangular shape that is long in the width direction W as a whole, and the second end portions 28 have an outline of a generally Y-shape which is gradually narrowed as a whole. In the capsule 8 illustrated in FIG. 3, the end face on the lower left side out of the end faces in the depth direction D is denoted by a reference sign 8A. In the capsule 8, each side face formed of the end face 26E and the lateral side face 25C and the distal end face 25B are denoted by a reference sign 8B.

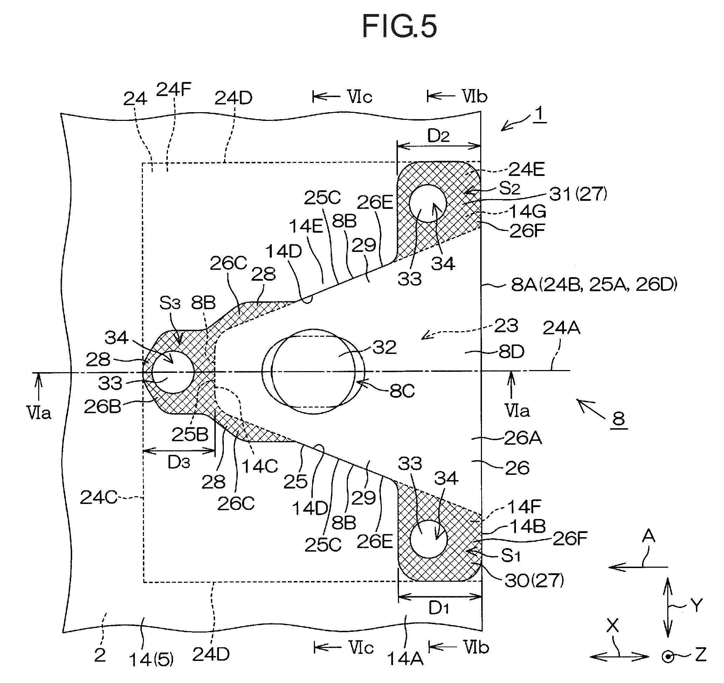

FIG. 5 is an enlarged view of main portions of the steering system 1 in FIG. 2. Note that, the posture of the steering system 1 in FIG. 5 is the same as that in FIG. 2. The capsule 8 illustrated in FIG. 5 is disposed on the upper side in FIG. 2. The axial direction X in FIG. 5 coincides with the depth direction D of the capsule 8 illustrated in FIG. 3. The right-left direction Y in FIG. 5 coincides with the width direction W of the capsule 8 illustrated in FIG. 3. The up-down direction Z in FIG. 5 coincides with the thickness direction T of the capsule 8 illustrated in FIG. 3.

Description will be made below with reference to FIG. 5 in addition to FIG. 1 to FIG. 4. As illustrated in FIG. 2 and FIG. 5, a pair of cutout grooves 23 is formed respectively in the pair of the plate members 14 (one cutout groove 23 is formed in one plate member 14). The cutout groove 23 is formed at a position at which the capsule 8 is disposed. Each cutout groove 23 is formed by cutting a rear end portion 14B of the plate member 14 out of end portions (end portions extending in the right-left direction Y) perpendicular to the axial direction X, and is formed as a recess opened toward the rear side. Specifically, each cutout groove 23 is a groove having a generally trapezoidal shape which is gradually narrowed in the right-left direction Y from the rear side to the front side. The cutout grooves 23 passes through the plate member 14 in the thickness direction (up-down direction Z). Out of the end faces of the plate member 14, which define the cutout groove 23, the end face perpendicular to the axial direction X at the deepest portion of the cutout groove 23 is defined as a distal end face 14C and both end faces in the right-left direction Y are defined as lateral end faces 14D.

The capsules 8 are respectively fitted into the cutout grooves 23 (see FIG. 2). In this state, the end faces 8A of the capsules 8 are located at the same position in the axial direction X as the end portions 14B of the plate members 14. Each capsule 8 is fitted into the corresponding cutout groove 23 with the lower side (the first retaining portion 24 side) in the thickness direction T in FIG. 3 oriented toward the upper side of the vehicle body 2. The distal end face 25B of the opposing portion 25 of each capsule 8 is disposed to be opposed to the distal end face 14C and the distal end faces 25B, 24C are parallel to each other. The lateral end faces 25C of the opposing portion 25 of each capsule 8 are disposed to be opposed to the lateral end faces 14D and the lateral end faces 25C, 14D are parallel to each other. That is, the end faces 8B of each capsule 8 are opposed to a peripheral edge portion 14E of the plate member 14, which defines the cutout groove 23. In this state, the end faces 8B and the peripheral edge portion 14E may be in contact with each other. However, the end faces 8B and the peripheral edge portion 14E need not be in contact with each other.

The first end portions 27 of each capsule 8 retain a region of the peripheral edge portion 14E around the cutout groove 23, the region being adjacent to the end portion 14B, in the up-down direction Z (that is, the thickness direction of the plate member 14) with the use of both lateral end portions 26F of the second retaining portion 26 and the end portion 24E of the first retaining portion 24. The second end portions 28 of each capsule 8 retain a region of the peripheral edge portion 14E around the cutout groove 23, the region being adjacent to the distal end face 14C, in the up-down direction Z with the use of the distal end portion 26B and the bulged portions 26C of the second retaining portion 26 and the end portion 24F of the first retaining portion 24. On the other hand, the lateral end portions 29 of each capsule 8 are opposed to the peripheral edge portion 14E in the right-left direction Y without retaining the peripheral edge portion 14E around the cutout groove 23 in the up-down direction Z.

The direction toward the steering shaft 3 (the steering shaft 3 side) in the right-left direction Y is defined as "inward direction" (inner side), and the direction away from the steering shaft 3 (the side opposite from the steering shaft 3 side) in the right-left direction Y is defined as "outward direction" (outer side). As described above, because the capsules 8 are disposed at position symmetric about the steering shaft 3, the first end portion 27 on the inner side is referred to as an inner end portion 30, and the first end portion 27 on the outer side is referred to as an outer end portion 31. The inner end portion 30 retains an inner peripheral edge portion 14F of the peripheral edge portion 14E around the cutout groove 23, the inner peripheral edge portions 14F being located on the steering shaft 3 side. The outer end portion 31 retains an outer peripheral edge portion 14G of the peripheral edge portion 14E, the outer peripheral edge portion 14G being located on the opposite side to the steering shaft 3 with respect to the cutout groove. As described above, because the first end portions 27 retain the plate member 14 at two spots on both sides, that is, at the inner end portion 30 and the outer end portion 31, the capsule 8 is able to stably support the upper bracket 5.

In FIG. 5, the regions of the peripheral edge portion 14E around the cutout groove 23, which are retained by the capsule 8, are indicated by a cross-hatched pattern. The region of the inner peripheral edge portion 14F of the peripheral edge portion 14E, which is retained by the inner end portion 30, is defined as a region S1. The region S1 is a region in which the inner end portion 30 and the inner peripheral edge portion 14F overlap with each other as viewed from the up-down direction Z. The region of the outer peripheral edge portion 14G of the peripheral edge portion 14E, which is retained by the outer end portion 31, is defined as a region S2. The region S2 is a region in which the outer end portion 31 and the outer peripheral edge portion 14G overlap with each other as viewed from the up-down direction Z. The region of the peripheral edge portion 14E, which is regained by the second end portion 28, is defined as a region S3. The region S3 is a region in which the second end portion 28 and the peripheral edge portion 14E overlap with each other as viewed from the up-down direction Z. The region S1 and the region S2 are symmetric about the reference line 24A. The region S3 has a shape symmetric about the reference line 24A. The inner peripheral edge portion 14F in the region S1 is defined as an inner retained portion, and the outer peripheral edge portion 14G in the region S2 is defined as an outer retained portion.

A screw hole 8C having a generally elliptical shape is formed at substantially the center of each capsule 8 (the center of the first retaining portion 24). The major axis of the elliptical screw hole 8C is parallel to the axial direction X. A bolt 32 is passed through the screw hole 8C. An insertion hole 34 having a circular shape as viewed from the up-down direction Z is formed in each of the region S1, the region S2, and the region S3 of each capsule 8. The insertion holes 34 pass through the capsule 8.

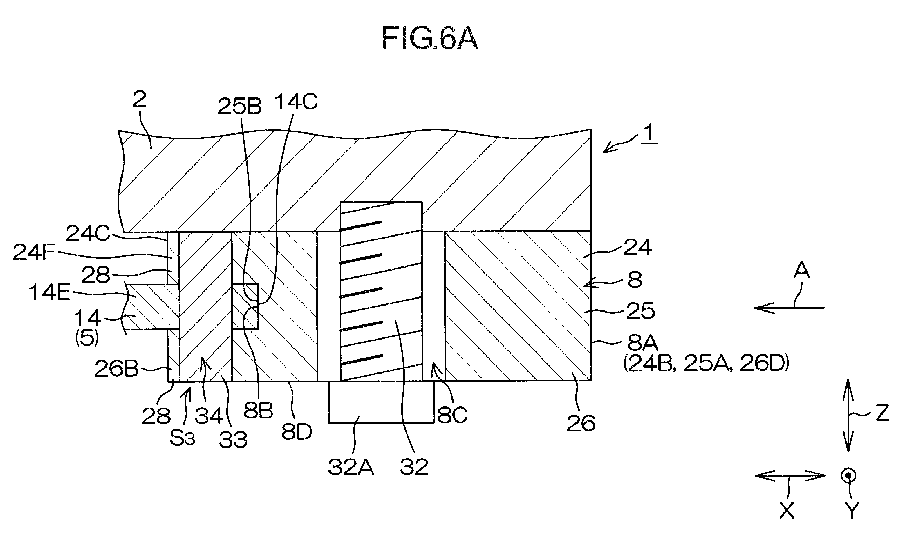

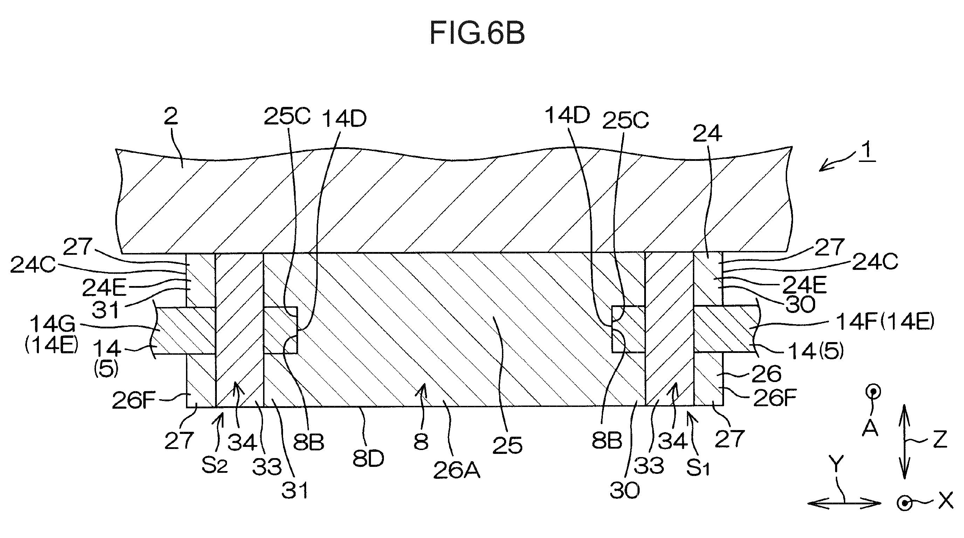

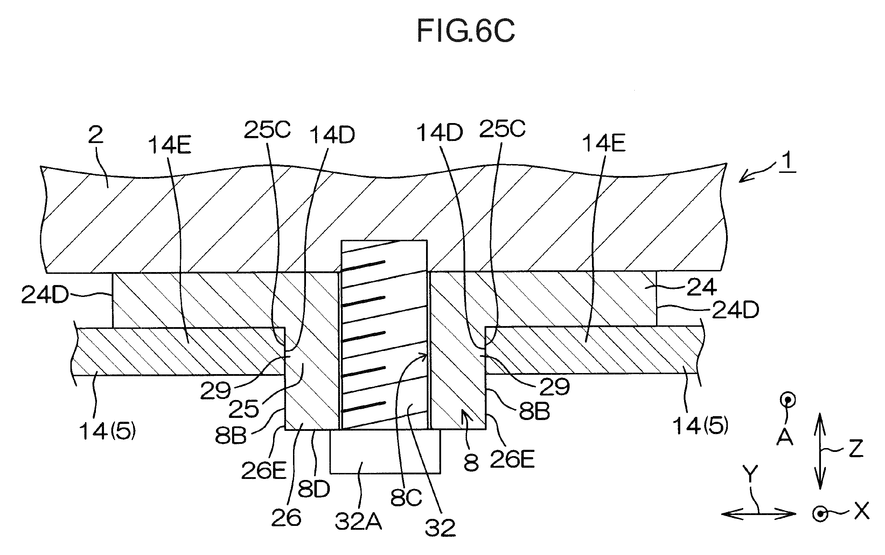

FIG. 6A is a sectional view of the capsule 8 taken along the line VIa-VIa in FIG. 5. FIG. 6B is a sectional view of the capsule 8 taken along the line VIb-VIb in FIG. 5. FIG. 6C is a sectional view of the capsule 8 taken along the line VIc-VIc in FIG. 5. FIG. 6A is a sectional view obtained by cutting the capsule 8 with a plane formed by the reference line 24A and the up-down direction Z, where the upper side of the vehicle body 2 coincides with the upper side of the drawing. FIG. 6B is a sectional view obtained by cutting the capsule 8 with a plane formed by a straight line passing through the center of the insertion hole 34 of the first end portion 27 and being parallel to the right-left direction Y and the up-down direction Z, where the upper side of the vehicle body 2 coincides with the upper side of the drawing. FIG. 6C is a sectional view obtained by cutting the capsule 8 with a plane formed by a straight line passing through the center of the bolt 32 and being parallel to the right-left direction Y and the up-down direction Z, where the upper side of the vehicle body 2 coincides with the upper side of the drawing.

Description will be made below with reference to FIG. 6A to FIG. 6C in addition to FIG. 1 to FIG. 5. As illustrated in FIG. 6C, at the time of attaching each capsule 8 to the vehicle body 2, the bolt 32 is passed through the screw hole 8C from the second retaining portion 26 side (from the lower side of FIG. 6C) with the first retaining portion 24 of the capsule 8 oriented toward the upper side of the vehicle body 2. As the bolt 32 is fastened to the vehicle body 2, a head 32A of the bolt 32 comes in contact with a bottom face 8D of the capsule 8. By further fastening the bolt 32 to the vehicle body 2 to press the capsule 8 against the vehicle body 2, the capsule 8 is fixed to the vehicle body 2.

As illustrated in FIG. 6A, in the region S3, a resin pin 33 is passed through the insertion hole 34. The resin pin 33 passes through the capsule 8 (the first retaining portion 24 and the second retaining portion 26) and the peripheral edge portion 14E of the plate member 14 of the upper bracket 5. As illustrated in FIG. 6B, in the region S1 and the region S2, a resin pin 33 is passed through each insertion hole 34. Each resin pin 33 passes through the capsule 8 and the plate member 14.

The operation of the steering system 1 at the time of a secondary collision will be described below. Before the secondary collision, each capsule 8 is connected to the upper bracket 5 with the resin pins 33 and is attached to the vehicle body 2 with the bolt 32. That is, the capsule 8 positions the upper bracket 5 with respect to the vehicle body 2. As illustrated in FIG. 1, when the steering system 1 receives an impact from the steering member 9 side at the time of a secondary collision, each plate member 14, which is a part of the upper bracket 5, attempts to move toward the front side of the vehicle body 2, that is, in a direction indicated by an arrow of a moving direction A in FIG. 1, in the state where the capsule 8 is left at the vehicle body 2, that is, in the state where the position of the capsule 8 is fixed to the vehicle body 2. Thus, the resin pins 33 illustrated in FIG. 5 are broken and the upper bracket 5 moves toward the downstream side in the moving direction A, that is, in the direction indicated by the arrow of the moving direction A in FIG. 1, together with the steering member 9.

The moving direction A coincides with the axial direction X. The downstream side in the moving direction A coincides with the front side of the vehicle body 2 and the upstream side in the moving direction A coincides with the rear side of the vehicle body 2. In this state, the plate member 14 is parallel to the moving direction A. The cutout groove 23 formed in each plate member 14 is a recess opened toward the upstream side in the moving direction A, at the end portion 14B on the upstream side in the moving direction A. The first end portions 27 are located at upstream side portions of each capsule 8 in the moving direction A, and the second end portions 28 are located at downstream side portions of each capsule 8 in the moving direction A.

With movement of the upper bracket 5 and each plate member 14, the areas of the region S1, the region S2, and the region S3 in which the capsule 8 retains the plate member 14 gradually decrease. The width of the region S1 in the moving direction A is defined as a distance D1, the width of the region S2 in the moving direction A is defined as a distance D2, and the width of the region S3 in the moving direction A is defined as a distance D3. In order to completely remove the capsule 8 from the cutout groove 23, the plate member 14 moves relative to the capsule 8 in the moving direction A over the longest distance among the distance D1, the distance D2, and the distance D3. After the plate member 14 moves toward the downstream side in the moving direction A relative to the capsule 8, the capsule 8 is removed toward the upstream side in the moving direction A from the cutout groove 23, so that the movement of the upper bracket 5 toward the downstream side in the moving direction A is allowed. That is, the upper bracket 5 and each plate member 14 are detached from the vehicle body 2. The capsule 8 does not retain the peripheral edge portion 14E around the cutout groove 23, at the lateral end portions 29 located between the first end portions 27 and the second end portions 28. Thus, it is possible to reduce the distance (specifically, the distance D1, the distance D2, and the distance D3) over which the upper bracket 5 moves until the capsule 8 is removed from the cutout groove 23.

If an impact due to a secondary collision is obliquely input into the steering member 9, and thus the upper bracket 5 attempts to tilt with respect to the moving direction A, more specifically, the upper bracket 5 attempts to tilt in a direction that is tilted toward the up-down direction Z with respect to the moving direction A, a twisting is about to occur between the plate members 14 of the upper bracket 5 and the capsules 8 that retain the plate members 14. Portions of each plate member 14, at which twisting occurs, are portions in which the peripheral edge portion 14E overlaps with the first end portions 27 and the second end portions 28 as viewed from the up-down direction Z.

However, as described above, because the distance (the distance D1, the distance D2, and the distance D3) over which the upper bracket 5 moves until each capsule 8 is removed from the cutout groove 23 is reduced by providing the capsule 8 with the lateral end portions 29, the capsule 8 is removed from the cutout groove 23 without being twisted relative to the plate member 14. Thus, a load required to detach the upper bracket 5 from each capsule 8 at the time of a secondary collision (referred to as "detachment load") is stably kept low, that is, variations in the detachment load are suppressed. By adjusting the distance D1, the distance D2, and the distance D3, it is possible to finely adjust the force with which each capsule 8 retains the upper bracket 5 or the detachment load.

At the same time that the upper bracket 5 is detached from the vehicle body 2, the steering column 4 and the steering shaft 3 move forward (toward the downstream side in the moving direction A) together with each other. The impact of the secondary collision is absorbed by this movement. As described above, in the steering system 1, it is possible to prevent twisting between the plate members 14 of the upper bracket 5 and the capsules 8.

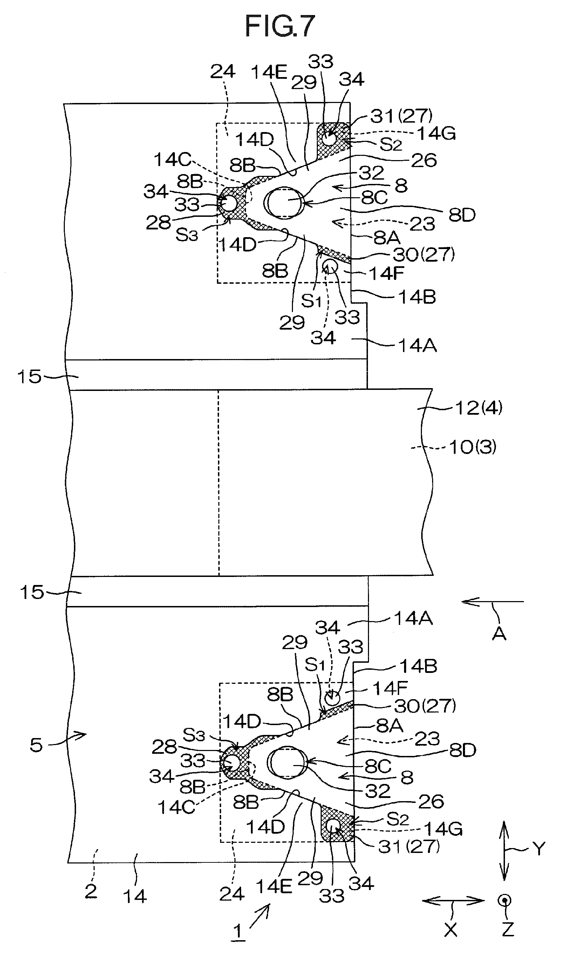

Next, another embodiment of the invention will be described. FIG. 7 is an enlarged view of main portions in the other embodiment. Note that, the posture of the steering system 1 in FIG. 7 is the same as that in FIG. 2. In FIG. 7, the same members as those described in the above embodiment will be denoted by the same reference signs as those in the above embodiment, and description thereof will be omitted. In FIG. 7, regions of the peripheral edge portion 14E around the cutout grooves 23, which are retained by the capsule 8, are indicated by a cross-hatched pattern. Description will be made below with reference to FIG. 7 in addition to FIG. 1 to FIG. 5 and FIG. 6A to FIG. 6C.

As illustrated in FIG. 7, in each capsule 8 in the present embodiment, the area of a region S1 (the region of the inner peripheral edge portion 14F, which is retained by the inner end portion 30) is smaller than the area of a region S2 (the region of the outer peripheral edge portion 14G, which is retained by the outer end portion 31). As illustrated in FIG. 7, the second retaining portion 26 in the inner end portion 30 is located outward of the resin pin 33 located in the region S1 in FIG. 5 in the right-left direction Y. In this state A well, the inner end portion 30 retains the inner peripheral edge portion 14F, and the second retaining portion 26 in the inner end portion 30 needs to protrude in the right-left direction Y from the lateral end portion 29 just by such an amount that the second retaining portion 26 is caught on the inner peripheral edge portion 14F. Specifically, the second retaining portion 26 in the inner end portion 30 needs to protrude just by approximately 1 mm. The resin pin 33 near the region S1 is not passed through the second retaining portion 26 of the capsule 8 and is passed through the insertion hole 34 of the plate member 14 and the first retaining portion 24. The resin pin 33 in the region S1 may be omitted.

The operation of the steering system 1 according to the present embodiment at the time of a secondary collision will be described below, on the assumption that an impact of a secondary collision is input into the steering member 9 obliquely (from a direction that is tilted toward the up-down direction Z with respect to the axial direction X in FIG. 7) and the upper bracket 5 attempts to move obliquely. At this time, the plate members 14 may be partially deflected in the up-down direction Z and pressed against the capsules 8, depending on the input impact. Because the plate members 14 are retained by the capsules 8, the portions of the plate members 14, which are located inward of the capsules 8 (on the steering shaft 3 side), are likely to be deflected easily. That is, the region S1, that is, the portion of the inner peripheral edge portion 14F of each plate member 14, which is retained by the inner end portion 30, is more easily deflected than the region S2, that is the portion of the outer peripheral edge portion 14G of each plate member 14, which is retained by the outer end portion 31. Thus, when the inner end portion 30 is shorter in the right-left direction Y than the outer end portion 31, that is, when the region S1 is smaller than the region S2, even if a portion on the inner side of the plate member 14 is more greatly deflected than a portion on the outer side due to an impact of a secondary collision, the capsule 8 is removed from the cutout groove 23 without causing twisting relative to the plate member 14.

The invention is not limited to the above-described embodiments, but may be implemented in various other embodiments without departing from the scope of the appended claims. For example, the outer end portion 31 may be shorter in the right-left direction Y than the inner end portion 30. Depending on the input direction of an impact due to a secondary collision, in each plate member 14, a portion on the outer side may be more greatly deflected than a portion on the inner side. Depending on the shape of the upper bracket 5 (for example, when a portion on the inner side is higher in rigidity than a portion on the outer side in each plate member 14), portions of the plate members 14, which are located outward of the capsules 8, may be more easily deflected than portions of the plate member 14, which are located inward of the capsules 8. In these cases, the region S2 of each plate member 14 is more easily deflected than the region S1. Thus, when the outer end portion 31 is short in the right-left direction Y, even if the portion on the outer side is more greatly deflected than the portion on the inner side in each plate member 14 due to an impact of a secondary collision, the capsule 8 is removed from the cutout grooves 23 without causing twisting with respect to the plate member 14.

In this way, the size of the region S2, that is, the portion of the outer peripheral edge portion 14G of the plate member 14, which is retained by the outer end portion 31, may be unequal to the size of the region S1, that is, the portion of the inner peripheral edge portion 14F of the plate member 14, which is retained by the inner end portion 30. In this case, when each plate member 14 is deflected due to an impact of a secondary collision, even if the degree of deflection of the plate member 14 differs between the inner side and the outer side, the capsules 8 is removed from the cutout grooves 23 without causing twisting with respect to the plate members 14 if the region S1 and the region S2 are different in size from each other depending on the difference in the degree of deflection between the inner side and the outer side.

The shapes of the first end portion 27 and the second end portion 28 are not limited to the shapes in the above-described embodiments, but may have an arc-shape or a polygonal shape as viewed from the thickness direction T (the up-down direction Z). The application of each capsule 8 is not limited to the steering system 1 on which both the tilt adjustment and the telescopic adjustment can be made, but each capsule 8 may be applied to all steering systems such as a steering system on which only one of the tilt adjustment and the telescopic adjustment can be made.

The steering system 1 may be applied to an electric power steering system that assists a steering operation with the use of an electric motor, and may be applied to a manual steering system in which steering assist using an electric motor is not performed. In the above-described embodiments, each capsule 8 is coupled to the plate member 14 with the resin pins 33, but the resin pins 33 need not be used. For example, each capsule 8 may be coupled to the plate member 14 by swaging, the capsule 8 may be provided with a structure for locking the plate member 14 in the moving direction A, or an additional component may be used to couple the capsule 8 to the plate member 14.

Members such as the capsules 8 that are fixed to the vehicle body 2 may each be provided with an impact absorption plate member for absorbing an impact of a secondary collision. The impact absorption plate member is deformed by being squeezed by, for example, the upper bracket 5 when the upper bracket 5 moves to the front side of the vehicle body 2 due to a secondary collision, so that an impact of the secondary collision is absorbed. In the above-described embodiments, because the distance (the distance D1, the distance D2, and the distance D3) over which the upper bracket 5 moves until the capsule 8 is detached from the upper bracket 5 is short, the capsule 8 is detached from the upper bracket 5 until the impact absorption plate member starts its deformation. Because twisting does not occur between the upper bracket 5 and the capsule 8, the energy at the time of a secondary collision is not lost due to the twisting. Thus, the impact absorption plate member is able to satisfactorily exhibit load characteristics, that is, is able to absorb a desired amount of energy.

The materials of the upper bracket 5 and the capsules 8 are not limited to metal such as iron, but may be resin or the like. The plate member 14 does not need to have the capsules 8 on the both sides in the right-left direction Y, and, for example, the plate member 14 may have only one capsule 8 at the center in the right-left direction Y.

## Claims

1. A steering system (1) comprising:
a bracket (5) that holds a steering shaft (3) to which a steering member (9) is connected, and that is movable toward a downstream side in a prescribed moving direction (A) together with the steering member (9) at the time of a secondary collision;
a plate member (14) that is provided in the bracket (5) to extend along the moving direction (A), and that has a cutout groove (23) that is a recess opened toward an upstream side in the moving direction (A) and formed in an upstream side end portion (29) of the plate member (14) in the moving direction (A), the cutout groove (23) passing through the plate member (14) in a thickness direction (T) of the plate member (14); and
a capsule (8) that is fitted in the cutout groove (23) to position the bracket (5) with respect to a vehicle body (2) before the secondary collision, and that allows the bracket (5) to move toward the downstream side in the moving direction (A) at the time of the secondary collision so as to remove the capsule (58) from the cutout groove (23), wherein the capsule (8) has
a first end portion (27) that is located in an upstream side portion of the capsule (8) in the moving direction (A), and that retains a peripheral edge portion (14E) of the plate member (14) in the thickness direction (T), the peripheral edge portion (14E) defining the cutout groove (23), the first end portion (27) having
an inner end portion (30) that retains an inner peripheral edge portion (14F) of the peripheral edge portion (14E) of the plate member (14), the inner peripheral edge portion (14F) being located on the steering shaft side, the peripheral edge portion (14E) defining the cutout groove (23); and
an outer end portion (31) that retains an outer peripheral edge portion (14G) of the peripheral edge portion (14E) of the plate member(14), the outer peripheral edge portion (14G) being located on an opposite side to the steering shaft (3) with respect to the cutout groove (23),
a second end portion (28) that is located in a downstream side portion of the capsule (8) in the moving direction (A), and that retains the peripheral edge portion (14E) of the plate member (14) in the thickness direction (T), the peripheral edge portion (14E) defining the cutout groove (23), and
a respective lateral end portion (29) located between the second end portion (28) and each of the inner end portion (30) and outer end portion (31) in the capsule (8), and that faces the peripheral edge portion (14E) of the plate member (14) without retaining the peripheral edge portion (14E) in the thickness direction (T),
**characterized in that**
the second end portion (28) retains a region of the peripheral edge portion (14E) adjacent to a distal end face (14C) of the cutout groove (23), the distal end face being perpendicular to the moving direction (A) at the deepest portion of the cutout groove (23).

2. The steering system (1) according to claim 1, wherein a size of a portion (S1) of the inner peripheral edge portion (14F), the portion being retained by the inner end portion (30), and a size of a portion (S2) of the outer peripheral edge portion (14G), the portion being retained by the outer end portion (31), are unequal to each other.

3. The steering system (1) according to claim 2, wherein the portion (S1) of the inner peripheral edge portion (14F), the portion being retained by the inner end portion (30), is smaller than the portion (S2) of the outer peripheral edge portion (14G), the portion being retained by the outer end portion (31).

4. The steering system (1) according to any one of claims 1 to 3, wherein the first end portion (27) and the second end portion (28) each have an arc-shape or a polygonal shape as viewed from the thickness direction (T).

## Patentansprüche

1. Lenksystem (1), aufweisend:
eine Lasche (5), welche eine Lenkwelle (3) halt, mit welcher ein Lenkbauteil (9) verbunden ist und welche zum Zeitpunkt eines Sekundärzusammenstoßes in Richtung einer stromabwärtigen Seite zusammen mit dem Lenkbauteil (9) in einer vorgeschriebenen Bewegungsrichtung (A) beweglich ist;
ein Plattenbauteil (14), welches in der Lasche (5) angeordnet ist, um sich entlang der Bewegungsrichtung (A) zu erstrecken und welches eine Ausschnittvertiefung (23) hat, welche eine Vertiefung ist, die sich in Richtung einer stromaufwärtigen Seite in der Bewegungsrichtung (A) öffnet und an einem stromaufwärtsseitigen Endabschnitt (29) des Plattenbauteils (14) in Bewegungsrichtung (A) ausgebildet ist, wobei die Ausschnittvertiefung (23) in einer Dickenrichtung (T) des Plattenbauteils (14) durch das Plattenbauteil (14) verläuft; und
eine Kapselung (8), welche in die Ausschnittvertiefung (23) eingesetzt ist, um die Lasche (5) bezügliche einer Fahrzeugkarosserie (2) vor dem Sekundärzusammenstoß zu positionieren und welche es der Lasche (5) gestattet, sich zum Zeitpunkt des Sekundärzusammenstoßes in Bewegungsrichtung (A) zur stromabwärtigen Seite zu bewegen, so dass die Kapselung (8) aus der Ausschnittvertiefung (23) entfernt wird, wobei die Verkapselung (8) aufweist:
einen ersten Endabschnitt (27), der in Bewegungsrichtung (A) an einem stromaufwärtsseitigen Abschnitt der Kapsel (8) liegt und der einen Umfangsrandabschnitt (14E) des Plattenbauteils (14) in Dickenrichtung (T) hält, wobei der Umfangsrandabschnitt (14E) die Ausschnittvertiefung (23) definiert, wobei der erste Endabschnitt (27) aufweist:
einen inneren Endabschnitt (30), der einen inneren Umfangsrandabschnitt (14F) des Umfangsrandabschnitts (14E) des Plattenbauteils (14) hält, wobei der innere Umfangsrandabschnitt (14F) an der Lenkwellenseite liegt und der Umfangsrandabschnitt (14E) die Ausschnittvertiefung (23) definiert; und
einen äußeren Endabschnitt (31), der einen äußeren Umfangsrandabschnitt (14G) des Umfangsrandabschnitts (14E) des Plattenbauteils (14E) hält, wobei der äußere Umfangsrandabschnitt (14G) bezüglich der Ausschnittvertiefung (23) an einer entgegengesetzten Seite zur Lenkwelle (3) liegt,
einen zweiten Endabschnitt (28), der in Bewegungsrichtung (A) an einem stromabwärtsseitigen Abschnitt der Verkapselung (8) liegt und der den Umfangsrandabschnitt (14E) des Plattenbauteils (14) in Dickenrichtung (T) hält, wobei der Umgangsrandabschnitt (14E) die Ausschnittvertiefung (23) definiert, und
einen entsprechenden seitlichen Endabschnitt (29), der zwischen dem zweiten Endabschnitt (28) und jedem von inneren Endabschnitt (30) und äußerem Endabschnitt (31) in der Verkapselung (8) liegt und der zu dem Umfangsrandabschnitt 14E) des Plattenbauteils (14) weist, ohne den Umfangsrandabschnitt (14E) in Dickenrichtung (T) zu halten,
**dadurch gekennzeichnet, dass**
der zweite Endabschnitt (28) einen Bereich des Umfangsrandabschnitts (14E) benachbart einer distalen Endfläche (14C) der Ausschnittvertiefung (23) hält, wobei die distale Endfläche senkrecht zur Bewegungsrichtung (A) am tiefsten Abschnitt der Ausschnittvertiefung (23) ist.

2. Lenksystem (1) nach Anspruch 1, wobei eine Größe eines Abschnitts (S1) des inneren Umfangsrandabschnitts (14F), wobei der Abschnitt von dem inneren Endabschnitt (30) gehalten ist, und eine Größe eines Abschnitts (S2) des äußeren Umfangsrandabschnitts (14G), wobei der Abschnitt vom äußeren Endabschnitt (31) gehalten ist, einander nicht gleich sind.

3. Lenksystem (1) nach Anspruch 2, wobei der Abschnitt (S1) des inneren Umfangsrandabschnitts (14F), wobei der Abschnitt von dem inneren Endabschnitt (30) gehalten ist, kleiner als der Abschnitt (S2) des äußeren Umfangsrandabschnitts (14G) ist, wobei der Abschnitt von dem äußeren Endabschnitt (31) gehalten ist.

4. Lenksystem (1) nach einem der Ansprüche 1 bis 3, wobei der erste Endabschnitt (27) und der zweite Endabschnitt (28) in Dickenrichtung (T)gesehen jeweils eine Bogenform oder eine Polygonalform haben.

## Revendications

1. Système de direction (1) comprenant :
un support (5) qui maintient un arbre de direction (3) auquel un élément de direction (9) est raccordé, et qui est mobile vers un côté en aval dans le sens de déplacement prescrit (A) conjointement avec l'élément de direction (9) au moment d'une collision secondaire ;
un élément de plaque (14) qui est prévu dans la support (5) pour s'étendre le long de la direction de déplacement (A), et qui a une rainure découpée (23) qui est un évidement ouvert vers un côté en amont dans la direction de déplacement (A) et formé dans une partie d'extrémité en amont (29) de l'élément de plaque (14) dans la direction de déplacement (A), la rainure découpée (23) passant par l'élément de plaque (14) dans le sens de l'épaisseur (T) de l'élément de plaque (14) ; et
une capsule (8) qui est montée dans la rainure découpée (23) pour positionner le support (5) par rapport à un corps de véhicule (2) avant la collision secondaire, et qui permet au support (5) de se déplacer vers le côté en aval dans la direction de déplacement (A) au moment de la collision secondaire afin de retirer la capsule (58) de la rainure découpée (23), dans lequel la capsule (8) a :
une première partie d'extrémité (27) qui est positionnée dans une partie en amont de la capsule (8) dans la direction de déplacement (A) et qui retient une partie de bord périphérique (14E) de l'élément de plaque (14) dans le sens de l'épaisseur (T), la partie de bord périphérique (14E) définissant la rainure découpée (23), la première partie d'extrémité (27) ayant :
une partie d'extrémité interne (30) qui retient une partie de bord périphérique interne (14F) de la partie de bord périphérique (14E) de l'élément de plaque (14), la partie de bord périphérique interne (14F) étant positionnée du côté de l'arbre de direction, la partie de bord périphérique (14E) définissant la rainure découpée (23) ; et
une partie d'extrémité externe (31) qui retient une partie de bord périphérique externe (14G) de la partie de bord périphérique (14E) de l'élément de plaque (14), la partie de partie de bord périphérique externe (14G) étant positionnée sur un côté opposé à l'arbre de direction (3) par rapport à la rainure découpée (23),
une seconde partie d'extrémité (28) qui est positionnée dans une partie en aval de la capsule (8) dans la direction de déplacement (A) et qui retient la partie de bord périphérique (14E) de l'élément de plaque (14) dans le sens de l'épaisseur (T), la partie de bord périphérique (14E) définissant la rainure découpée (23), et
une partie d'extrémité latérale (29) respective positionnée entre la seconde partie d'extrémité (28) et chacune parmi la partie d'extrémité interne (30) et la partie d'extrémité externe (31) dans la capsule (8), et qui fait face à la partie de bord périphérique (14E) de l'élément de plaque (14) sans retenir la partie de bord périphérique (14E) dans le sens de l'épaisseur (T),
**caractérisé en ce que** :
la seconde partie d'extrémité (28) retient une région de la partie de bord périphérique (14E) adjacente à une face d'extrémité distale (14C) de la rainure découpée (23), la face d'extrémité distale étant perpendiculaire à la direction de déplacement (A) au niveau de la partie la plus profonde de la rainure découpée (23).

2. Système de direction (1) selon la revendication 1, dans lequel une taille d'une partie (S1) de la partie de bord périphérique interne (14F), la partie étant retenue par la partie d'extrémité interne (30) et une taille d'une partie (S2) de la partie de bord périphérique externe (14G), la partie étant retenue par la partie d'extrémité externe (31), sont différentes l'une de l'autre.

3. Système de direction (1) selon la revendication 2, dans lequel la partie (S1) de la partie de bord périphérique interne (14F), la partie étant retenue par la partie d'extrémité interne (30), est inférieure à la partie (S2) de la partie de bord périphérique externe (14G), la partie étant retenue par la partie d'extrémité externe (31).

4. Système de direction (1) selon l'une quelconque des revendications 1 à 3, dans lequel la première partie d'extrémité (27) et la seconde partie d'extrémité (28) ont chacune une forme d'arc ou une forme polygonale, comme observé dans le sens de l'épaisseur (T).
